# EUROPEAN PATENT SPECIFICATION

(11) **EP 1 023 824 B1**
(45) Date of publication and mention of the grant of the patent: **23.03.2005**
(21) Application number: 00100397.9
(22) Date of filing: 07.01.2000
(51) Int. Cl.: A01C 23/02, A01C 5/06, A01B 33/02, A01B 17/00

(54) **Method and apparatus for burying manure**
Verfahren und vorrichtung zum verlegen von Gülle
Procédé et appareil pour enterrer du lisier

(30) Priority: 11.01.1999 DK 2199
(43) Date of publication of application: 02.08.2000
(73) Proprietor: Sörensen, Harry, DK-6818 Ärre (DK)
(72) Inventor: Sörensen, Harry, DK-6818 Ärre (DK)
(74) Representative: Gregersen, Niels Henrik

(56) References cited:
- EP-A- 0 358 281
- EP-A- 0 645 075
- WO-A-98/42175
- FR-A- 2 208 274
- FR-A- 2 558 332

## Description

The present invention concerns a method and an apparatus for burying liquid manure and of the kind indicated in the preamble of claim 1.

Usually, prior art methods and apparatuses for burying manure work with fixed shares or teeth that are drawn through the soil and thereby create grooves in the ground, and which interact with or are built together with discharge nozzles for the manure. However, a lot of force is required, that is a very strong and heavy tractor for drawing a larger number of fixed shares or teeth through the soil. By distributing manure on planted areas, by way of example grass fields, if it is at all possible to draw the shares or the teeth through the earth, fixed shares or teeth imply relatively large damage to the root network, why in practice it has most often been possible only to use drawing hose booms for discharging liquid manure on planted areas.

EP-A2-0 358 281 discloses a device for the injection of liquid manure into the ground. A very narrow cut is made in the ground of for example grassland by vertical disposed pairs of blades. Directly at the contact point between the blades debouches a nozzle that is connected to a reservoir for liquid manure. Thus achieved is that the liquid manure is introduced directly into the narrow cut in the ground, after which the cut is closed up again by a following furrow closer. This prevents environmentally damaging ammonia escaping from the liquid manure into the surrounding air.

The invention has the purpose of indicating a method for burying manure of the kind indicated in the introduction and which by means of simple technical means makes possible to achieve a more optimal distribution and thereby utilisation of the manure.

The method according to the invention is characterised in that the grooves are created by means of roller discs provided with a central, annular cutter plate which are pressed onto the ground surface and which by means of fork arm means are moved quickly from side to side like a dancing roller and create said grooves in the ground in the shape of relatively deep, uniform grooves as said fork arm means are asymmetrically suspended on a shaft being common to a number of roller discs.

In a simple way it hereby becomes possible to achieve a more optimal distribution of the buried manure and which, without use of exceptional power supply, furthermore makes possible to bury manure on area already planted, e.g. grass fields. In other words, it becomes possible to utilize, that is bury manure at times where it until now has been prohibited due to the risk of percolation of poisonous or environmentally hostile compounds to the ground water.

The invention according to the invention is suitably further characterised in that said lateral movement of the fork arm means is arranged so that said fork arm means are simultaneously moved in pairs in direction towards each other and in direction away from each other, respectively.

The power supply for creating the grooves in the ground comes directly from the tractor engine via power output, i.e. wheel slip is avoided because the main part of the power is transmitted directly and not via the wheels. The grooves are strongly absorbing as the grooves are loose at the bottom and to some degree also in the sides. The grooves may, because of large width at the bottom, have relatively large cross sectional volume with substantial U-shape with a depth of about 5 cm and a width of about 2 cm corresponding to a cross sectional area of about 10 cm², that is by efficient filling up of the groove, more that 30 tonnes of manure per ha may be buried.

At the forming of the grooves there are formed small banks of the pressed-up soil along both sides of the grooves which prevent or obstruct the manure in running transversely of the grooves if these are overflowing. Because of zigzag shaped groove and groove bottom there is furthermore a reduced tendency of running of manure in undulating terrain. No or only minimal tearing up of the ground occurs because of the roller discs which, as mentioned, furthermore make possible driving in a thick and long crop. No external pressure appear on the roller discs as the vibrations cause the discs to dig into the ground by themselves, which again gives possibility for greater working breadth because of lesser pull in the frame. Minimised wear in relation to the size of the groove - the groove is pushed up.

The method according to the invention is furthermore characterised in that discharge of manure in the said grooves takes place successively by means of special discharge nozzles arranged immediately behind the roller discs. The filling takes place gradually so that recoil fouling by the manure jet is avoided. Furthermore, the manure gets easier access to the completely fresh and porous walls of the grooves, that is that utilisation of the manure is further optimised by the manure getting access to a maximum surface with large absorbing capability.

The invention also concerns an apparatus for use in performing the method according to the invention and of the kind indicated in the preamble of claim 4, which apparatus is characterised in that said groove forming devices are constituted by roller discs provided with a central, annular cutter plate which by means of fork arm means are arranged to be moved quickly from side to side like a dancing roller and create said grooves in the ground in the shape of relatively deep, uniform grooves as said fork arm means are asymmetrically suspended on a shaft being common to a number of roller discs.

By means of simple technical measure there is hereby achieved a manure burying apparatus making possible to achieve a more optimal distribution of the buried manure and which furthermore makes possible to optimise burying manure on areas already planted, e.g. grass fields, with a relatively small power consumption.

The apparatus according to the invention is further suitably designed so that basic parts of said fork arm means are asymmetrically suspended on a common shaft preferably driven by a power output connection so that the roller discs, which during the travel of apparatus across the ground are held pressed onto the ground, are imparted said quick lateral swinging movement by rotation of the common shaft.

With the intention of counteracting unnecessary vibratory actions in the load-bearing frame, the apparatus according to the invention may advantageously be designed so that said fork arm means are suspended in pairs on the common shaft so that the roller discs are simultaneously moved in pairs in direction towards each other and in direction away from each other, respectively.

With the purpose of avoiding so-called recoil fouling by the manure jet, the apparatus according to the invention may advantageously be designed so that said manure discharge nozzles preferably arranged immediately behind the roller discs discharge into a special distributing head comprising a share partly closed at the front projecting down into the grooves, which distributing head is open at the rear and has substantially double convex walls, the lower side edges of which substantially extend along the ground surface and the upper side edges of which extend sloping backwards/downwards.

With the intention of automatically minimising the total transport width of the whole manure burying apparatus, it may be very advantageous that the apparatus according to the invention is designed so that said side booms are connected with upper, opposite side parts of the lift system by means of hydraulic cylinders, the piston rods of which are fastened close to the outer ends of the side booms, wherein inner ends of which are hinge connected with opposite, outer ends of said central, stationary boom by means of short intermediate arms and roller chains extending around fixed sprocket wheels fastened on axle journals at opposite outer ends of said central, stationary booms, said axle journals furthermore constitute turning bearings for end parts of said intermediate arms, the opposite ends of which are pivotally connected with axle journals fastened on said inner ends of said side booms, and which constitute the centre of fixed guide discs along the outer surface of which said roller chains furthermore extend, so that said side booms by activating the said hydraulic cylinders may be pivoted between said horizontal work position and said vertical transport position, and so that said inner ends of the side booms in the said transport positions furthermore are disposed at a distance within opposite outer ends of the stationary boom.

The invention is explained more closely in the following with reference to the drawing on which:
- Fig. 1: shows a plane side view, partly in section, of an embodiment of a manure burying apparatus according to the invention,
- Fig. 2: shows a plane view of the manure burying apparatus according to the invention shown in Fig. 1 as seen from above,
- Fig. 3: shows a plane view of the manure burying apparatus according to the invention shown in Fig. 1 as seen from the rear,
- Fig. 4: shows in a perspective view a pair of mutually interacting roller discs with associated groove fillers for a manure burying apparatus according to the invention,
- Fig. 5: shows a plane view of the roller discs with groove fillers according to the invention shown in Fig. 4 as seen from the side,
- Fig. 6: shows a plane view of the roller discs with groove fillers according to the invention shown in Fig. 5 as seen from above,
- Fig. 7: shows a plane view of the roller discs with groove fillers according to the invention shown in Fig. 5 as seen from the rear,
- Fig. 8: shows a sectional view of a pair of mutually interacting roller discs for a manure burying apparatus according to the invention for illustrating its operating system,
- Fig. 9: shows an embodiment of a boom system for a manure burying apparatus according to the invention as seen from the rear and with a right side boom pivoted to a vertical transport position,
- Fig. 10: shows the boom system shown in Fig. 9 with the right side boom pivoted to horizontal working position,
- Fig. 11: shows an enlarged view of a control detail for the right side boom with an intermediate swing arm and fixed roller chain cooperating with stationary suspended sprocket wheel as seen with the side boom pivoted to vertical transport position, and
- Fig. 12: shows an enlarged view of a control detail for the right side boom with the intermediate swing arm and fixed roller chain cooperating with stationary suspended sprocket wheel as seen with the right side boom pivoted to horizontal working position.

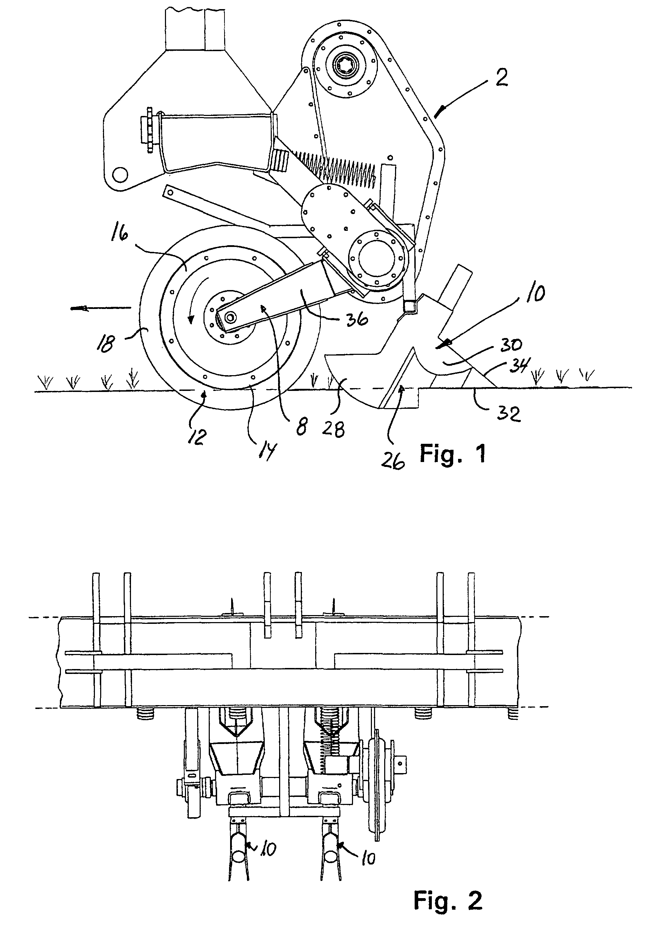

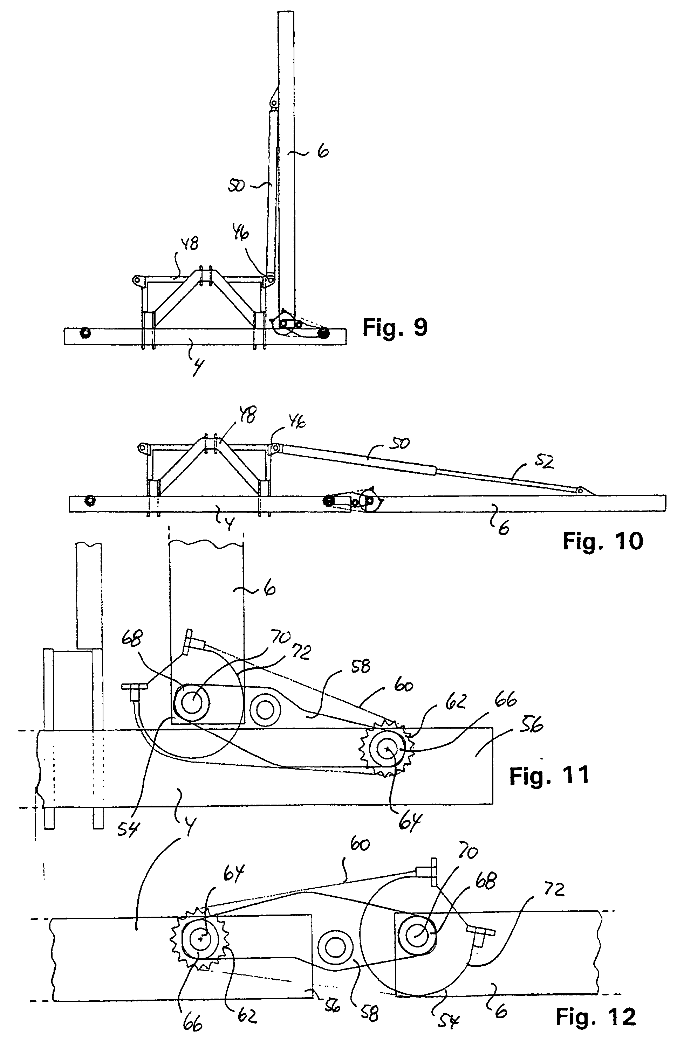

The manure burying apparatus 2 shown in Figs. 1 - 3 is arranged in a way known by itself to be mounted in a lift system at the rear end of a liquid manure tank vehicle which for the purpose, by way of example as shown in Figs. 9-12, is provided with a central stationary boom 4 and a number of side booms 6 arranged to be pivoted between a vertical transport position (Figs. 9 and 11) and a horizontal working position (Figs. 10 and 12). The swing system shown for the side booms 6 will be described in more detail below.

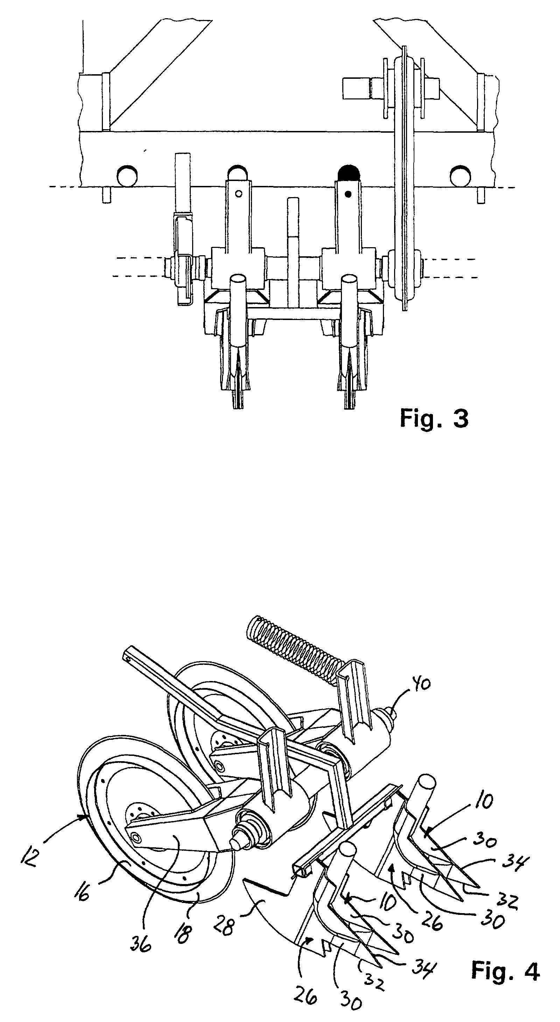

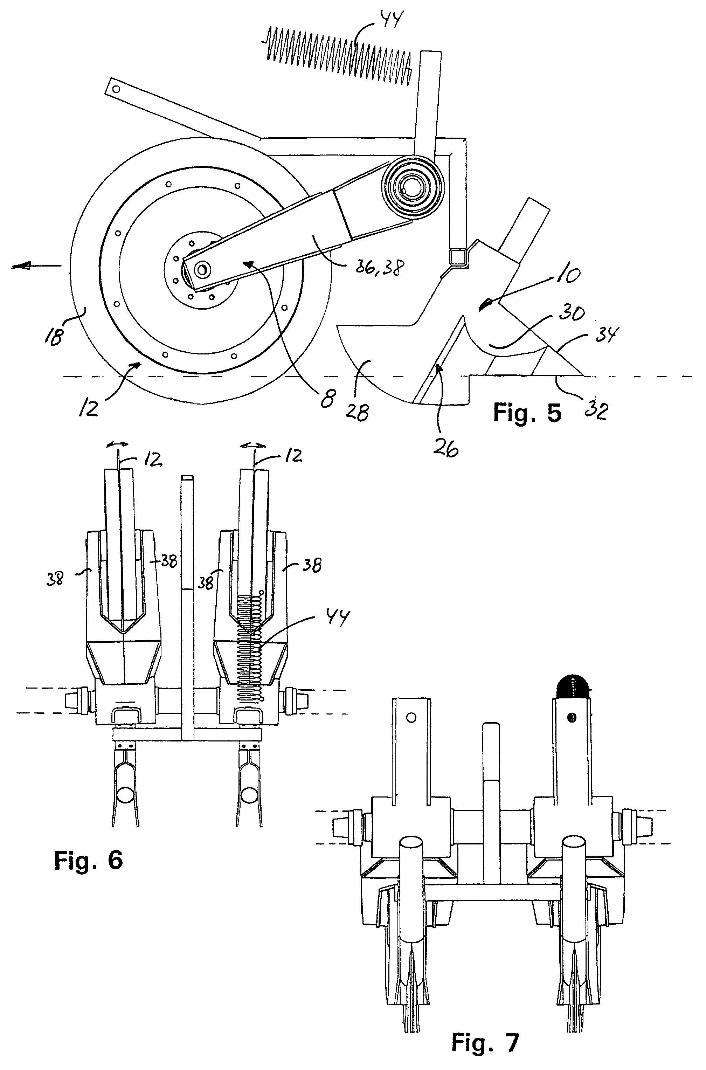

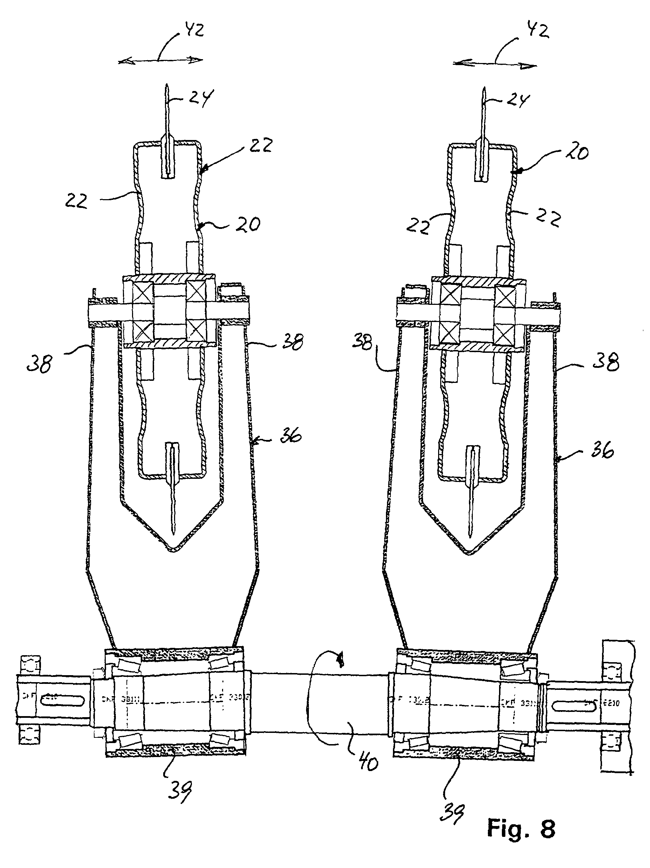

The manure burying apparatus 2 comprises a number of groove forming devices 8 with associated manure discharge nozzles 10 (Figs. 4-7) which are mounted both on the central stationary boom 4 and on the side booms 6 which, for example, combined have a working width of about 9 m (3 x 3) corresponding by way of example to 30 pieces of groove forming devices 8 and by way of example 30 pieces of manure discharge nozzles 10. The groove forming devices 8 are constituted by special roller discs 12 which either, cf. Figs. 4 - 7, each consist of a plate wheel 14 with open sides 16 and where the roller disc itself 12 is constituted by a central, circular plate 18, or, cf. Fig. 8, each consist of a closed plate wheel 20 formed by two bowl-shaped elements 22 assembled around central, annular plate cutters or shares 24.

Immediately behind each groove forming device 8 there is disposed a manure discharge nozzle 10 discharging into a special distribution head 26 which comprises a share 28 partly closed at the front and projecting down into the grooves. The distribution head 26, which is open at the rear, has substantially double convex side walls 30, the lower side edges 32 of which substantially extend along the ground surface and the upper side edges 34 of which extend sloping backwards/downwards.

The lateral swinging movement to and fro of the roller discs 12 of each of the groove forming devices 8 is performed by means of special fork arm means 36, each having two fork arms 38 in which the roller discs 12 are suspended, and which opposite to the fork arms 38 by means of basic parts 39 are asymmetrically suspended on a common drive shaft 40 in such a way that the roller discs 12 by rotation of the drive shaft 40 is brought to oscillate to and fro in lateral direction as indicated with arrows 42. When at the same time the roller discs 12 by means of tension springs 44 are pressed onto the ground surface, the lateral, high-frequency oscillating movement of the roller discs 12 will cause that relatively uniform grooves are formed in the ground surface. The said asymmetrical suspension of the basic parts 39 corresponds to a lateral side oscillation movement 8 (amplitude) of the roller discs 12 in the magnitude 1 cm, corresponding to a resulting groove width of about 2 cm. With a groove depth of about 5 cm, the cross sectional area of the groove thus becomes about 10 cm², which corresponds to a total manure burying of about 30 tonnes per ha if there is reckoned with a gradual filling of the groove over a distance of 20-25 cm.

It should be emphasised that the grooves in the ground are created by spring loaded roller discs 12 drawn through the earth by the tractor and which are moved from side to side by a drive connection directly from the tractor, that is the pulling load on the tractor is so small that wheel slip usually does not occur.

The previously mentioned swing arrangement of the boom system of the apparatus, comprising a central, stationary boom 4 and two side booms 6 is designed in such a manner that said side booms 6 are control connected with upper, opposite side parts 46 of the lift system 48 by means of hydraulic cylinders 50, the piston rods 52 of which are fastened close to the outer ends of the side booms 6, the inner ends 54 of which are hinge connected with opposite, outer ends 56 of the central, stationary boom 4 by means of short intermediate arms 58 and roller chains 60 extending around fixed sprocket wheels 62 fastened on axle journals 64 at opposite outer ends 56 of the central, stationary boom 4, which axle journals 64 furthermore constitute turning bearings for end parts 66 of said intermediate arms 58, the opposite ends 68 of which are pivotally connected with axle journals 70 fastened on said inner ends 54 of the side booms 6, and which preferably constitute the centre of fixed guide discs 72 about which said roller chains 60 furthermore extend, so that the side booms 6 by activating the said hydraulic cylinders 50 may be pivoted between said horizontal work position and said vertical transport position, and so that the inner ends 54 of the side booms 6 in the said transport positions furthermore are disposed at a distance within opposite outer ends of the stationary boom 4, so that minimal total transport width and height of the manure burying apparatus is achieved in a simple way.

Of course the control system described for the side booms 6 with intermediate arms 58 and fixed roller chains 60 may be used more generally, by way of example in connection with segmented harrows and/or rollers, or possibly in connection with the first swinging in of drawing hose booms before these are subsequently swung forward/downward along both sides of the manure tank.

## Claims

1. A method for burying liquid manure in the ground, where the manure is discharged into grooves created successively in the ground, **characterised in that** the grooves are created by means of roller discs (12, 20) provided with a central, annular cutter plate (18, 24) which are pressed onto the ground surface and which by means of fork arm means (36, 38) are moved quickly from side to side like a dancing roller and create said grooves in the ground in the shape of relatively deep, uniform grooves as said fork arm means are asymmetrically suspended on a shaft (40) being common to a number of roller discs (12, 20).

2. A method according to claim 1, **characterised in that** said lateral movement of said fork arm means (36, 38) is arranged so that said fork arm means (36, 38) are simultaneously moved in pairs in direction towards each other and in direction away from each other, respectively.

3. A method according to claim 1, **characterised in that** discharge of manure in the said grooves takes place successively by means of discharge nozzles (10) arranged immediately behind the roller discs (12, 20).

4. An apparatus (2) for burying liquid manure by means of the method according to claim 1, which apparatus is arranged to be mounted in a hydraulic lift system preferable at the rear end of a manure tank vehicle as the apparatus comprises a boom system with a number of groove forming devices with each their manure discharge nozzle arranged along a central, stationary boom (4) and along a number of side booms (6) arranged to be swung between a mainly vertical transport position and a horizontal work position, in which said groove forming devices are arranged to be pressed onto the ground surface, **characterised in that** said groove forming devices are constituted by roller discs provided with a central, annular cutter plate (18, 24) which by means of fork arm means (36, 38) are arranged to be moved quickly from side to side like a dancing roller and create said grooves in the ground in the shape of relatively deep, uniform grooves as said fork arm means are asymmetrically suspended on a shaft (40) being common to a number of roller discs (12, 20).

5. An apparatus (2) according to claim 4, **characterised in that** basic parts (39) of said fork arm means (36, 38) are asymmetrically suspended on a common shaft (40) preferably driven by a power output connection so that said roller discs (12, 20), which during the travel of the apparatus across the ground are held pressed onto the ground, are imparted said quick lateral swinging movement by rotation of said common shaft (40).

6. An apparatus (2) according to claim 4, **characterised in that** said fork arm means (36, 38) are suspended in pairs on said common shaft (40) so that said roller discs are simultaneously moved in pairs in direction towards each other and in direction away from each other, respectively.

7. An apparatus (2) according to claim 4, **characterised in that** said manure discharge nozzles (10) arranged immediately behind said roller discs (12, 20) discharge into a distributing head (26) comprising a share (28) partly closed at the front projecting down into the grooves, which distributing head (26) is open at the rear and has substantially double convex walls, the lower side edges (32) of which substantially extend along the ground surface and the upper side edges (34) of which extend sloping backwards/downwards.

8. An apparatus (2) according to claim 4 and where said side booms (6) are connected with upper, opposite side parts of said lift system by means of hydraulic cylinders (50), the piston rods (52) of which are connected close to the outer ends of said side booms (6), **characterised in that** inner ends (54) of said side booms (6) are hinge connected with opposite, outer ends (56) of said central, stationary boom (4) by means of short intermediate arms (58) and roller chains (60) extending around fixed sprocket wheels (62) fastened on axle journals (64) at opposite outer ends of said central, stationary boom (4), said axle journals (64) furthermore constitute turning bearings (66) for end parts of said intermediate arms(58), the opposite ends of which are pivotally connected with axle journals (70) fastened on said inner ends (54) of said side booms (6), and which constitute the centre of fixed guide discs (72) along the outer surface of which said roller chains (60) furthermore extend, so that said side booms (6) by activating the said hydraulic cylinders (50) may be pivoted between said horizontal work position and said vertical transport position, and in such a manner that the inner ends (54) of the side booms in the said transport positions furthermore are disposed at a distance within opposite outer ends (56) of said stationary boom (4).

## Patentansprüche

1. Verfahren zum Eingraben von flüßiger Gülle in der Erde, wobei die Gülle in Rillen, die in der Erde hintereinander gebildet sind, abgelassen wird, **dadurch gekennzeichnet, daß** die Rillen mittels Rundscharen (12,20) gebildet werden, die mit einer zentralen, ringförmigen Schneidplatte (18,24) vorgesehen sind, die gegen die Erdoberfläche angepresst werden und die mittels Gabelarmmitteln (36,38) schnell von Seite zu Seite bewegt werden wie bei einer Tänzerwalze, und die genannten Rillen in der Erde in der Form von relativ tiefen, einheitlichen Rillen bilden, indem die genannten Gabelarmmittel asymmetrisch an einer Welle (40) aufgehängt sind, die für eine Anzahl von Rundscharen (12,20) gemeinsam ist.

2. Verfahren nach Anspruch 1, **dadurch gekennzeichnet, daß** die genannte seitliche Bewegung der genannten Gabelarmmitteln (36,38) derartig arrangiert ist, daß die genannten Gabelarmmittel (36,38) gleichzeitig in Paaren in der Richtung auf einander und beziehungsweise von einander bewegt werden.

3. Verfahren nach Anspruch 1, **dadurch gekennzeichnet, daß** Ablassung von Gülle in den genannten Rillen nachfolgend mittels Ablassungsdüsen (10), die ummittelbar hinter den Rundscharen (12,20) angebracht sind, stattfindet.

4. Apparat (2) zum Eingraben von flüßiger Gülle mittels eines Verfahrens nach Anspruch 1, wobei der Apparat zur Anbringung in einem hydraulischen Hebesystem vorgesehen ist, vorzugsweise an dem hinteren Ende eines Gülletankfahrzeuges, indem der Apparat ein Auslegersystem mit einer Anzahl von rillenbildenden Anordnungen umfaßt, jeder mit eigener gülleablassenden Düse vorgesehen, arrangiert entlang einem zentralen stationären Ausleger (4) und entlang einer Anzahl von Seitenauslegern (6), die zur Schwenkung zwischen einer hauptsächlich vertikalen Transportposition und einer horizontalen Arbeitsposition arrangiert sind, wobei die genannten rillebildenden Anordnungen dafür vorgesehen sind, gegen die Erdoberfläche angepresst zu werden, **dadurch gekennzeichnet, daß** die genannten rillebildenden Anordnungen von Rundscharen ausgemacht werden, die mit einer zentralen ringförmigen Schneidplatte (18,24) vorgesehen sind, die mittels Gabelarmmitteln (36,38) zur schnellen Bewegung von Seite zu Seite wie bei einer Tänzerwalze arrangiert sind, und die genannte Rillen in der Erde in der Form von relativ tiefen, einheitlichen Rillen bilden, indem die genannten Gabelarmmittel asymmetrisch an einer Welle (40), die für eine Anzahl von Rundscharen (12,20) gemeinsam ist, aufgehängt sind.

5. Apparat (2) nach Anspruch 4, **dadurch gekennzeichnet, daß** die Basisteile (39) der genannten Gabelarmmitteln (36,38) asymmetrisch an einer gemeinsamen Welle (40) aufgehängt sind, die vorzugsweise von einer Kraftanschlußverbindung getrieben wird, so daß die genannte schnelle seitliche Schwenkbewegung mittels Rotation der genannten gemeinsamen Welle (40) zu den genannten Rundscharen (12,20) übertragen wird, die während dem Transport des Apparats über die Erde an der Erde angepresst gehalten werden.

6. Apparat (2) nach Anspruch 4, **dadurch gekennzeichnet, daß** die genannten Gabelarmmittel (36,38) in Paaren an der genannten gemeinsamen Welle (40) aufgehängt sind, so daß die genannten Rundscharen gleichzeitig in Paaren in der Richtung auf einander und beziehungsweise in der Richtung von einander bewegt werden.

7. Apparat (2) nach Anspruch 4, **dadurch gekennzeichnet, daß** die genannten gülleablassenden Düsen (10), die ummittelbar hinter den genannten Rundscharen (12,20) arrangiert sind, in einem Verteilungskopf (26) hinein ablassen, der eine Schar (28) umfaßt, die vorne teilweise geschlossen ist und in den Rillen herunterragt, wobei der Verteilungskopf (26) hinten offen ist, und hauptsächlich doppelte konvexe Wänden ausweist, wobei die unteren Seitenkanten (32) hiervon sich hauptsächlich entlang der Erdoberfläche erstrecken und die oberen Seitenkanten (34) hiervon sich schräg nach hinten/unten erstrecken.

8. Apparat (2) nach Anspruch 4 und wobei die genannten Seitenausleger (6) mit oberen, gegenüberstehenden Seitenteilen des genannten Hebesystems mittels hydraulischen Zylindern (50) verbunden sind, wobei die Kolbenstangen (52) hiervon nahe an den Außenenden der genannten Auslegern (6) verbunden sind, **dadurch gekennzeichnet, daß** die Innenenden (54) der genannten Auslegern (6) mit gegenüberstehenden Außenenden (56) eines zentralen stationären Auslegers (4) mittels kurzen Zwischenarmen (58) und Rollenketten (60) gelenkig verbunden sind, die sich um eingespannte Zahnräder (62) erstrecken, die an Wellenzäpfen (64) an gegenüberstehenden Außenenden des genannten zentralen stationären Auslegers (4) befestigt sind, wobei die genannten Wellenzäpfen (64) außerdem das Drehlager (66) für Endteile der genannten Zwischenarme (58) darstellen, wobei die gegenüberstehenden Enden hiervon mit den Wellenzäpfen (70) drehbar verbunden sind, die an den genannten Innenenden (54) von den genannten Seitenauslegern (6) befestigt sind, und die das Zentrum der eingespannten Leitscheiben (72) darstellen, wobei die genannten Rollketten (60) sich außerdem entlang der Außenoberfläche hiervon erstrecken, so daß die Seitenausleger (6) mittels Aktivierung der hydraulischen Zylindern (50) zwischen der genannten horizontalen Arbeitsposition und der genannten Transportposition geschwenkt werden können, und auf einer solchen Weise, daß die Innenenden (54) der Seitenauslegern in den genannten Transportpositionen außerdem in einem Abstand innerhalb den Außenenden (56) der genannten stationären Ausleger (4) vorgesehen sind.

## Revendications

1. Procédé pour enterrer du lisier dans le sol, le lisier étant déchargé dans des sillons créés successivement dans le sol, **caractérisé en ce que** les sillons sont créés au moyen des rouleaux à disques (12, 20) munis d'une plaque de coupe centrale annulaire (18, 24) qui sont pressés contre la surface du sol et qui à l'aide des organes de bras de fourche (36, 38) sont actionnés rapidement de gauche à droite et de droite à gauche comme un rouleau libre et créent lesdits sillons dans le sol en forme des sillons réguliers relativement profonds comme lesdits organes de bras de fourche sont logés asymétriquement dans un arbre (40) étant commun à un nombre de rouleaux à disques (12, 20).

2. Procédé selon la revendication 1, **caractérisé en ce que** ledit mouvement latéral desdits organes de bras de fourche (36, 38) est arrangé de sorte que lesdits organes de bras de fourche (36, 38) sont actionnés simultanément par paires dans la direction l'une s'approchant de l'autre et respectivement dans la direction l'une s'éloignant de l'autre.

3. Procédé selon la revendication 1, **caractérisé en ce que** la décharge du lisier dans lesdits sillons s'effectue successivement à l'aide de buses de décharge (10) arrangées immédiatement derrière les rouleaux à disques.

4. Appareil (2) pour enterrer du lisier à l'aide du procédé selon la revendication 1, lequel appareil est arrangé pour être monté dans un système de relevage hydraulique de préférence à l'extrémité arrière du véhicule citerne à lisier étant donné que l'appareil comporte un système de rampe avec un nombre de dispositifs créant des sillons possédant chacun leur buse de décharge du lisier arrangée au long d'une rampe centrale, stationnaire (4) et au long d'un nombre de rampes latérales (6) destinées à être pivotées entre une position de transport essentiellement verticale et une position de travail horisontale, dans laquelle lesdits dispositifs créant des sillons sont arrangés pour être pressés sur la surface du sol, **caractérisé en ce que** les dispositifs créant des sillons sont constitués par des rouleaux à disques munis d'une plaque de coupe centrale annulaire (18, 24) qui à l'aide des organes de bras de fourche (36, 38) sont arrangés pour être actionnés rapidement de gauche à droite et de droite à gauche comme un rouleau libre et créent lesdits sillons dans le sol en forme des sillons réguliers relativement profonds comme lesdits organes de bras de fourche sont logés asymétriquement dans un arbre (40) étant commun à un nombre de rouleaux à disques (12, 20).

5. Appareil (2) selon la revendication 4, **caractérisé en ce que** des parties de base (39) desdits organes de bras de fourche (36, 38) sont asymétriquement logés sur un arbre commun (40) de préférence entraîné par une connexion de prise de force de sorte que lesdits rouleaux à disques (12, 20), qui lors du passage de l'appareil au-dessus du sol sont maintenus pressés contre le sol, entraînent ledit mouvement de pivotement latéral rapide par rotation dudit arbre commun (40).

6. Appareil (2) selon la revendication 4, **caractérisé en ce que** lesdits organes de bras de fourche (36, 38) sont logés par paires sur ledit arbre commun (40) de sorte que lesdits rouleaux à disques sont actionnés simultanément par paires dans la direction l'une s'approchant de l'autre et respectivement dans la direction l'une s'éloignant de l'autre.

7. Appareil (2) selon la revendication 4, **caractérisé en ce que** lesdites buses de décharge du lisier (10) arrangées immédiatement derrière lesdits rouleaux à disques (12, 20) déchargent dans une tête de distribution (26) comprenant un soc (28) partiellement fermé vers l'avant s'étendant dans les sillons, ladite tête de distribution (26) étant ouverte vers l'extrémité arrière et possédant substantiellement des doubles parois convexes, dont les arêtes inférieures (32) s'étendent substantiellement au long de la surface du sol et dont les arêtes supérieures (34) s'étendent obliquement vers l'arrière/vers le bas.

8. Appareil (2) selon la revendication 4 et où lesdites rampes latérales (6) sont reliées à des parties latérales opposées supérieures dudit système de relevage à l'aide de cylindres hydrauliques (50), dont les tiges de piston (52) sont reliées près des extrémités extérieures desdites rampes latérales (6), **caractérisé en ce que** les extrémités intérieures (54) desdites rampes latérales (6) sont articulées à charnière avec des extrémités extérieures opposées (56) de ladite rampe stationnaire centrale (4) à l'aide des bras intermédiaires courts (58) et des chaînes à rouleaux (60) s'étendant autour des roues dentées (62) fixées aux tourillons (64) sur des extrémités extérieures oppposées de ladite rampe stationnaire centrale (4), lesdits tourillons (64) constituent en outre des paliers tournants (66) pour les parties d'extrémité desdits bras intermédiaires (58), dont les extrémités opposées sont liées en rotation aux tourillons (70) fixés sur lesdites extrémités intérieures desdites rampes latérales (6), et qui constituent le centre des disques de guidage fixés (72) au long de la surface extérieure de laquelle lesdites chaînes de rouleau (60) en plus s'étendent de sorte que lesdites rampes latérales (6) en actionnant lesdits cylindres hydrauliques (50) peuvent être pivotées entre ladite position de travail horisontale et ladite position de transport verticale, et dans une telle manière que les extrémités intérieures (54) des rampes latérales dans lesdites positions de transport en outre sont disposées à une distance aux extrémités extérieures opposées (56) de ladite rampe stationnaire (4).
